# EUROPEAN PATENT SPECIFICATION

(11) **EP 1 244 251 B1**
(45) Date of publication and mention of the grant of the patent: **26.10.2016**
(21) Application number: 01107261.8
(22) Date of filing: 23.03.2001
(51) Int. Cl.: H04L 12/26, H04L 12/24

(54) **Method, computer system, and computer program for monitoring services of an information technology environment**
Verfahren, Computersystem und Computerprogramm zur Überwachung von Diensten in einer Informationstechnologie - Umgebung
Méthode, système informatique, et programme de logiciel pour surveiller des services d'un environnement de technologie de l'information

(43) Date of publication of application: 25.09.2002
(73) Proprietor: Hewlett Packard Enterprise Development LP, Houston, TX 77070 (US)
(72) Inventor: Hermann, Alfred, 71263 Weil der Stadt (DE); Vosseler, Frank, 71155 Altdorf (DE); Gutjahr, Bernd, 75395 Ostelsheim (DE); Klotz, Peter, 70736 Fellbach (DE)
(74) Representative: Holt, Daniel Richard

(56) References cited:
- WO-A-00/72183
- LEWIS L: "Spectrum Service Level Management Definition, Offerings, and Strategy" CABLETRON TECHNICAL NOTE, 30 March 1998 (1998-03-30), XP002150696
- KUBO K ET AL: "A METHOD OF EXTRACTING MANAGEMENT INFORMATION FOR SERVICE MANAGEMENT" NTT REVIEW, TELECOMMUNICATIONS ASSOCIATION, TOKYO, JP, vol. 10, no. 2, 1 March 1998 (1998-03-01), pages 63-68, XP000740456
- LEWIS L ET AL: "Incorporating business process management into network and systems management" PROCEEDINGS. ISADS. INTERNATIONAL SYMPOSIUM ON AUTONOMOUS DECENTRALIZED SYSTEMS, XX, XX, 9 April 1997 (1997-04-09), pages 385-392, XP002150698

## Description

The present invention relates generally to the monitoring of information technology (IT) environments, and more particularly to a method, a computer system, and a computer program for monitoring the status of services of an IT environment.

Nowadays, as information systems become ubiquitous, and companies and organizations of all sectors become severely dependent on their computing network and IT services, the demand for tools for monitoring IT environments increases rapidly.. The class of sensitive IT services includes online transaction processing, electronic commerce, Internet/World Wide Web, data warehousing, telecommunication switches, and server applications that generally run 24 hours a day. In addition, almost all internal business processes such as electronic communication or information retrieval rely on a properly functioning IT network. These servers must run perpetually, providing a service to the employees and clients, and therefore demand a high availability as the cost of any outage can be substantial. While it is essential for companies to maintain the health of their IT services, the underlying IT environment becomes more and more complex and thus susceptible to failures. Not only is the number of computers within an IT network growing rapidly, but also many services are distributed over the network and depend thus on several network components. In large IT networks those dependencies make it impossible for administrators and operators to keep an overview over the performance of the IT services without an appropriate service management tool.

Operators of complex services that are distributed over different platforms within an IT network are often confronted with a huge number of messages reporting the status and errors of nodes of the IT network. Due to the number of network components and the complex interactions between those components it is difficult for the operator to resolve the dependencies of the generated error messages and to track down the origin of the problem. Moreover, it is even difficult to detect important error messages and distinguish them from less important messages so that there is a risk that the operator overlooks relevant messages in the stream of messages.

A service management tool is an IT solution for managing the availability and performance of IT-based business services from the end user's perspective. Those tools are able to detect and evaluate the health and availability of a service or application, recognize and warn the operator when a problem is about to occur and respond automatically to poor performance. They allow the user to manage individual services and all elements that depend on these services. They enable the user to build management models of the IT environment that represent the service elements and the relationships and dependencies between them. One feature of those service management tools is therefore to provide the status of any of those services in the light of the dependencies amongst them. The Hewlett-Packard product HP OpenView VantagePoint for Windows™ is such a service management system that runs under Windows™ but is also able to manage heterogeneous IT environments independent of the platform.

Service management tools are aiming to support administrators and operators of complex network-based IT services. In general, the task of administrators is to set up the management model, to configure it and maintain the model configuration, and to define failures and suppression criteria in order to reduce the information that is sent to operators. The operators' primary function is to monitor the status of a service and to troubleshoot and respond to problems using the information provided by the service management tool.

Service management tools are usually built on common network software and common console software such as the Microsoft Management Console (MMC) for the Windows™ environment which is a common console framework for IT management applications. MMC provides a basic framework for the management of IT environments. The invention, however, is intended to improve the possibilities of monitoring IT environments in view of the growing complexity of those environments.

WO 00/72183 A2, according to which the preamble has been drafted, gives an overview of different aspects of service level management. A state of a service is defined by one or more service parameters, and the service parameters depend upon performance of network components that support the service. The state of the service may depend, for example, on a collection of availability parameter values of the components on which the service is based (p. 60, I. 22-29).

### SUMMARY OF THE INVENTION

A method is provided for monitoring services of an information technology (IT) environment. The services are represented in a service management model. The method comprises evaluating, by a status engine, the status of a superordinate service that depends on at least one of the statuses of one or more subordinate services and one or more messages that come from services of the IT environment and affect the status of the superordinate service. The evaluation is done according to one or more rules. The method is characterized in that one of the rules is an ignore rule that excludes a status of a specific subordinate service - that otherwise would affect the statuses of other services - from the status evaluation. Furthermore, it comprises labeling the specific subordinate service that is not intended to contribute to the status calculation of the superordinate service with an ignore status and excluding that the specific subordinate service labeled with the ignore status from the status calculation in the status engine according to the ignore rule using the ignore status.

The invention also relates to a computer system for monitoring services of an IT environment. The services are represented in a service management model. The system comprises a status engine for evaluating the status of the services;
a user interface for configuring rules; and
a graphical display for visualizing monitoring results.

The status engine is programmed so as to calculate the status of a superordinate service that depends on at least one of the statuses of one or more subordinate services and one or more messages that come from services of the IT environment and the statuses of the one or more subordinate services affect the status of the superordinate service. The evaluation is done according to one or more rules. The computer system is characterized in that one of the rules is an ignore rule that excludes a status of a specific subordinate service - that otherwise would affect the statuses of other services - from the status evaluation. Furthermore, it is arranged to label the specific subordinate service that is not intended to contribute to the status calculation of the superordinate service with an ignore status and to exclude the specific subordinate service labeled with the ignore status from the status calculation in the status engine according to the ignore rule using the ignore status.

The invention also relates to a computer program product including program code for carrying out the method of claim 1 for monitoring services of an information technology (IT) environment, when executed on a computer system.

Other features are inherent in the disclosed method and computer system or will become apparent to those skilled in the art from the following detailed description and the accompanying drawings.

In the accompanying drawings:
Fig. 1 shows a high-level architecture of a service management system;
FIG. 2 shows schematically a status engine and its components;
FIG. 3 schematically depicts a service hierarchy;
FIG. 4 shows an example of a service map;
FIG. 5 shows an example of a service map;
FIG. 6 illustrates schematically a status propagation and calculation;
FIG. 7 illustrates an embodiment of the invention;
FIG. 8 illustrates the processing of statuses;
FIG. 9 displays the general processing of statuses according to status calculation rules, and in particular, an example aspect a) ;
FIG. 10 illustrates an example aspect c) ;
FIG. 11 illustrates an example of aspect b) ;
FIG. 12 illustrates an example of aspect b).

### DETAILED DESCRIPTION OF THE PREFERRED EMBODIMENTS

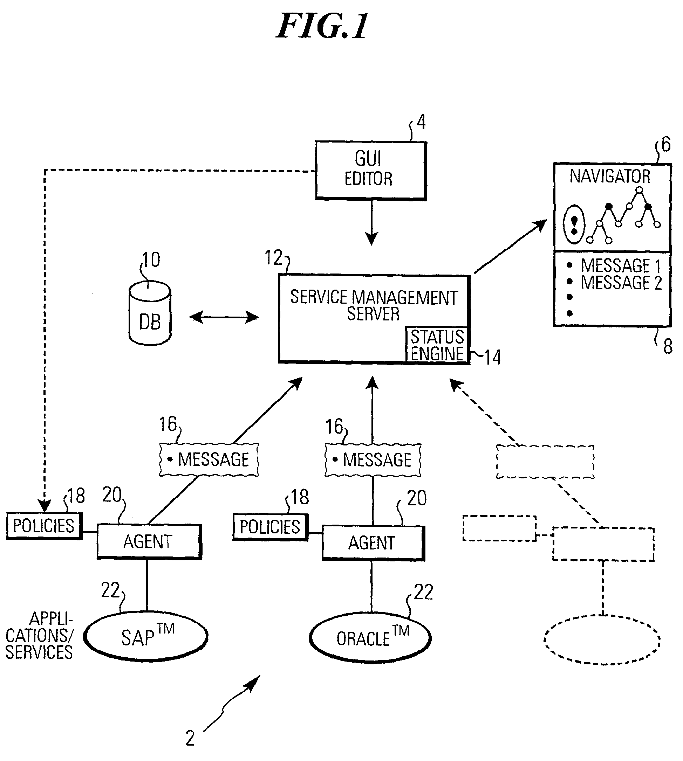

The general high-level architecture of a service management system is depicted in Fig. 1. Before proceeding further with the description, however, a few items of the preferred embodiments will be discussed.

In general, the purpose of an IT network of a company is to offer services to their employees and customers. Services for employees, for instance, are a facility for exchanging electronic mails, or for accessing electronic data bases. The company's web page is an example of an IT service for customers. Services in this context range from low-level network components such as routers or switches to software applications such as Microsoft™ Office or an Oracle™ database, and from hardware-based services such as printing or displaying capabilities, up to abstract high-level services such as the marketing department that itself uses various other IT services. These different kinds of services comprise one or more hardware or software components within the computing environment. Most services are, in fact, an aggregation of applications and computer systems. All these services and their individual components represent nodes within the network and can be represented as elements in a service management model. Thus the term IT environment refers in particular to IT networks, but also to applications, services, software components and network elements.

Most services are not stand-alone applications but require the availability of other services. For instance, the high-level service Microsoft™ Office for a desktop computer requires that the Microsoft™ applications, such as Excel, Access, Word, etc., are running, an e-mail service and a printing capability are available, whereas the printing capability again may rely on various printers and network components. Therefore, the term "superordinate" service refers to a service that depends on one or more "subordinate" services. The subordinate services themselves may again depend on other services. The latter would thus be the superordinate service of other subordinate services on the next level. In the above example, Microsoft™ Office would be the superordinate service depending, among others, on the subordinate service "printing capability" which would itself be the superordinate service of the subordinate services of individual printers.

The term "message" refers to a structured notification that is generated as a result of an event. Typically, an event represents a fault or a problem in operation, but it can also be a change in application system network or service status. Messages are sent to the service management server reporting basically the status of the service that has triggered the event. For example, when the printer's paper tray is empty, the printer's status changes. This results in an event that creates a message notifying the service management server of the printer's new status.

The status of a service can take different severity levels. The severity level indicates the impact of events or messages associated with a service on the performance of the service. Typical severities of services or messages associated with services are "normal", "warning", "minor", "major", or "critical".

Since the availability and performance of a superordinate service depends on subordinate services, the status of the superordinate service is also a function of the status of the subordinate services. So-called "rules" define how the statuses of the subordinate services contribute to the status of the superordinate service. In some cases it is difficult to derive the proper status of the superordinate service only from the statuses of the subordinate services and corresponding messages concerning the superordinate service. Therefore, according to aspect a) of dependent claim 2, the rules are extended so that additional attributes for both the superordinate services and the subordinate services are taken into account for the calculation of the status of the superordinate service. Such an additional attribute might be, for example, a parameter indicating the usage of a storage disk. This parameter might significantly affect the status of a superordinate service that relies on free disk space of that storage disk.

In other cases, it is advantageous to ignore the status of certain subordinate services for the purpose of calculating the status of a superordinate service. To this end, according to the invention, rules can be supplied that exclude specific subordinate services from the status calculation. For example, services that are known to be in maintenance can be excluded from the status calculation as the status of messages relating to this service might not reflect its real status.

Rules for the calculation of the status of a superordinate service take into account either the status of subordinate services, messages reporting the status of the superordinate service or additional attributes other than the status, or any combination of those. According to aspect b) of claim 2 logical or arithmetical operations or combinations of both on the basis of these parameters can be defined by the user in order to determine the status of the superordinate service. This is particularly useful for giving, for example, an individual subordinate service more importance than the other contributing subordinate services, for imposing thresholds on certain attributes, or for setting values of different attributes in relation to each other. The logical and arithmetical operations also comprises comparison operations and condition statements.

Most flexibility can be achieved by allowing the user to use a complete syntax of a programming language to define rules for the calculation of the status of a superordinate service. According to aspect c) of therefore, the rules can be programmed individually by the user.

The above rules are applied in addition to simpler rules from the state of the art, in which, for example, the status of the subordinate service with the highest severity level is taken as the status of the superordinate service.

As discussed above, it is advantageous to realize in addition to the ignore rule according to the invention, each of the aspects a) to c) individually. In preferred embodiments, also any combinations of these aspects are implemented, for instance aspects a) and b) together. However, most preferably all aspects a), b) and c) are included in the service management system. Even though with aspect c) the preceding aspects a) and b) can be implemented, it is often more convenient for the user to make use of the predefined functionality of the aspects a) and b) in addition to c).

The status of a subordinate service, when propagated to the superordinate service and further to the next level and so forth, might gain or lose importance for the status of the following level. Therefore the status of services can be individually manipulated when they are applied in the status calculation of the next higher level using so-called status propagation rules. These rules usually increase or decrease the severity of a status of a service or leave the status unchanged during the propagation from one level to the next higher level. The aspects a) to c) comprise a different type of rules, as they use the already manipulated statuses of subordinate services or messages for determining the status of the superordinate service.

The preferred embodiments therefore distinguish between status propagation rules that have as input only one parameter, namely the status of one subordinate service, and status calculation rules according to aspect a) to c) that can have several parameters as input, namely the status of subordinate services, messages reporting a status, or additional attributes. Regarding aspect b) and c), the calculation of the superordinate service depends most preferably on all three different types of input data: statuses of subordinate services, messages affecting the superordinate service and additional attributes of both subordinate and superordinate services.

As already mentioned, the possible values that the status of the services can take are for example "normal", "warning", "minor", "major", "critical". In the preferred embodiments of aspect a) the additional attributes can take values different from those of the status of the services, such as numeric values representing, for example, the usage of a storage disk.

The attributes of a service can also be useful for defining specific conditions. For instance, the status of a superordinate service is only calculated if certain attributes of the service are set.

By applying aspects a) to c) specific subordinate services can be treated individually for the calculation of the superordinate service. This means that specific subordinate services can be weighted relative to other subordinate services.

Aspect c) allows the user to include specific external data in the status calculation rules. Since the rules can be programmed individually using any common programming language, it is possible to integrate into the rule an interface, for instance, to an external data base. Most preferably, this external data comprises time of the day information meaning that the result of the application of the rule depends on the time of the day.

The preferred embodiments provide various interfaces for configuring the rules. Preferably, the ignore rule and the rules according to aspect b) are configured using a graphical user interface in which predefined logical and arithmetical operations can be selected by the user to be applied to the status of subordinate services, messages or attributes. The configuration of rules according to aspect a) and c) is most preferably done by using an application programming interface to other programming languages providing the user with the greatest possible flexibility in defining the rules. Logical and arithmetical operations of aspect b) can of course be included while using this kind of interface. The programming languages applied to define the rules comprise both script programming languages and compiled programming languages such as C or C⁺⁺. The script or interpreter programming languages can be either a common language such as PERL or a language provided by the service management system defining a certain syntax. This kind of interface provides all the flexibility the syntax of the script programming language offers while being a user-friendly way to define complex rules.

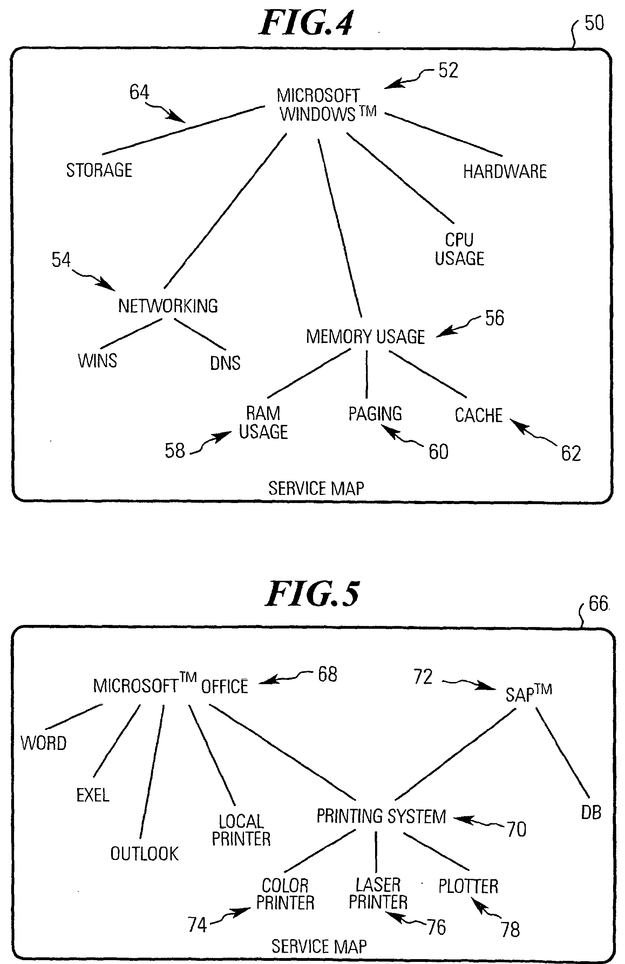

In general, the relationship between services and components of services can have two different natures. In the simpler case, each superordinate service depends on various subordinate services and so on, whereas each subordinate service has only one relationship to a superordinate service. This special kind of network structure is called tree structure. An example of such a tree structure would be a Microsoft™ Office package comprising the applications Word, Excel, Outlook and a local printer as depicted in Fig. 5. In the more complex case of a so-called graph structure, a superordinate service can have more than one relationships to services of the next higher level. An example of such a graph structure would be a printing system within a network that performs printing jobs for Microsoft™ Office as well as for SAP™ applications as indicated in Fig. 5. In other words, in a tree structure any service has only one connection to the upper level whereas in a graph structure several connections to upper-level services are possible while both having one or more connections to lower-level services. In fact, the tree structure is a special case of the graph structure. The preferred embodiments are able to handle not only networks of services in the form of a tree structure, but also the more complex graph structure of relationships between the services.

The dependencies between the services of the IT network are most preferably visualized as graphical representation, for instance as a two-dimensional map, giving the user a clear view of the relations between the various services. In addition, the status and status changes of the services are visualized in such a two-dimensional map.

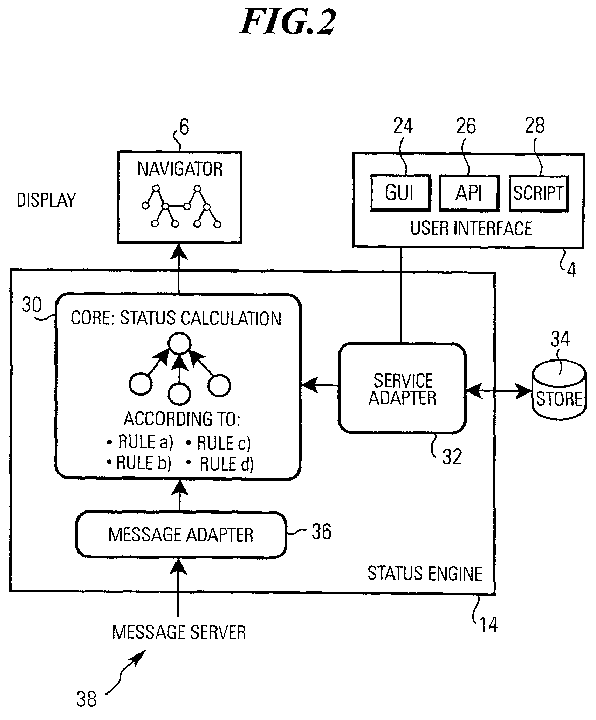

The preferred embodiments of the computer program comprise a program code which, for example, is stored on a computer- readable data carrier or is in the form of signals transmitted over a computer network. The preferred embodiments of the program code are written in an object-oriented programming language, such as C++. Some of the components of the service management system also have a hardware part. For example, the storage component 34 of Fig. 2 comprises a physical storage medium for continuously storing the collected data. It is clear that a computer program comprises only the software parts of these components.

Fig. 1 shows a high-level architecture of preferred embodiments of a service management system 2 and its components. Applications and services 22 such as SAP™ or Oracle™ within a managed IT environment are each monitored by individual agents 20. The services may be located on different platforms with different operating systems forming a heterogeneous environment. The agents 20 receive event notifications and collect performance data from the applications and services 22. They evaluate these event notifications and performance data according to instructions of policies 18 that are defined by a user via a graphical user interface (GUI) 4. As reaction, messages 16 are sent by the agents 20 to a service management server 12, and in particular, to a status engine 14 which is the main component of the service management system and is, for instance, running on the service management server 12. The service management server 12 stores the messages in a database 10, processes the content of the messages and sends the results to a navigator display 6 and a message browser 8. In the navigator display 6 a two-dimensional service map comprising the status of the individual services is shown. In the message browser 8 the most relevant messages are displayed and can be manipulated by the user. One purpose of the GUI 4 is to allow the user to edit rules for the status engine 14 on how to process the content of the messages 16.

Fig. 2 provides a closer view of the status engine 14 and its components. A message server 38, which is part of the service management server 12, is responsible for forwarding the messages created by the agents 20 to a message adapter 36. In the message adapter 36 the event notifications from a variety of messages are consolidated and passed to a core component 30 of the status engine where the severity information associated with the messages is used for the status calculation of the services. Using the severity information from the message adapter 36 the statuses of the various services are calculated in the core component 30 according to the ignore rule and preferably the rules of aspect a) to c). A service adapter 32 provides the core component 30 with information about the current service model including current services and their relation to each other, and provides the status calculation and propagation rules for the corresponding services and service components. The service model and the corresponding status calculation rules are stored in a database 34.

The status calculation rules and the service model are configured via the user interface 4. The preferred embodiments comprise three different ways for configuring the status calculation rules: a graphical user interface (GUI) 24 allowing the user to select and specify predefined rules, an application programming interface (API) 26 allowing any program code to be linked to the status calculation, and a script programming interface 28 allowing a predefined programming syntax to be used for the status calculation. The results of the status calculations are visualized in the navigator display 6 illustrating the status and the status changes of the services in a two-dimensional service map.

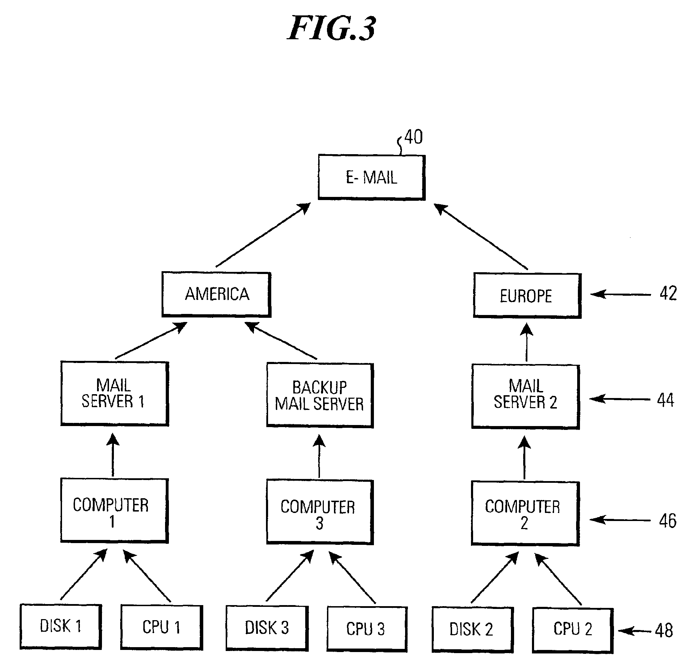

As an example for a service tree structure, Fig. 3 depicts a service hierarchy for an email service. The ordered dependency relationships between the services are illustrated by the arrows in the drawing. The top level service is e-mail 40. This service is dependent on two lower level services 42, America and Europe, which in this case represent e-mail services on two continents. These services are dependent on other services, such as e-mail servers 44 and computers 46, down to the lowest-level services 48.

Fig. 4 shows an other example for a service hierarchy in the form of a service tree structure as it is displayed in the preferred embodiments as a two-dimensional service map 50. As root service, in this case Microsoft Windows™ 52, is chosen which depends on other services such as networking 54, memory usage 56 and others. These services 54 and 56 are again superordinate services of other subordinate services on a lower level such as RAM usage 58, paging 60 and cache 62 in the case of the superordinate service memory usage 56. The dependency relations between superordinate and subordinate services are visualized by a line 64 connecting the corresponding services.

An example for a service network in the form of a graph structure is depicted in Fig. 5 as two-dimensional service map 66. The superordinate service Microsoft™ Office depends among others on a printing system 70 which again depends on other subordinate services such as a color printer 74, a laser printer 76, and a plotter 78. There is also another superordinate service SAP™ 72 with regard to the printing system 70. Therefore, the printing system 70 has two relations to superordinate services, which is the characteristic of a graph structure of services.

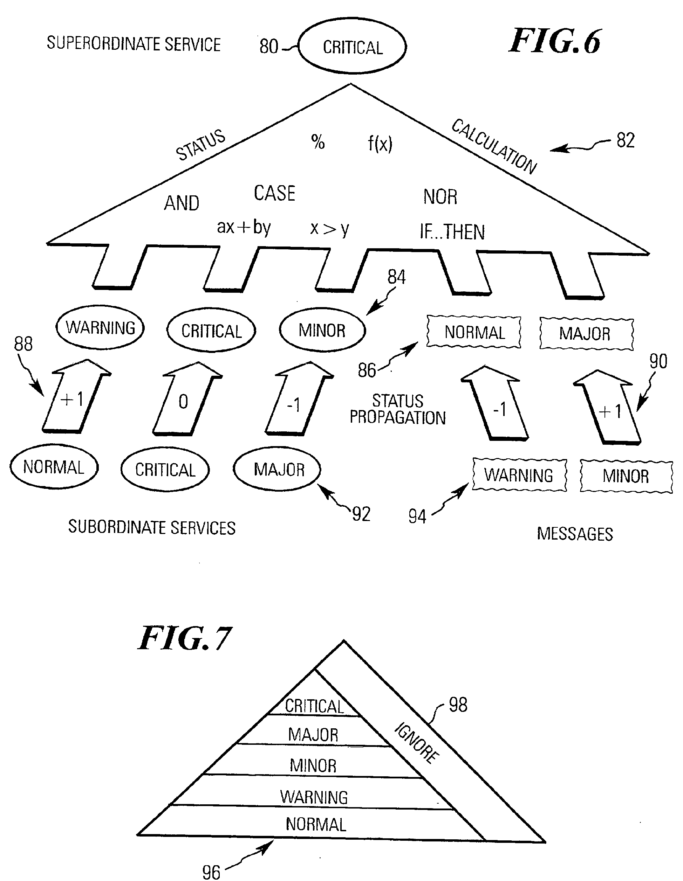

Fig. 6 illustrates schematically a status propagation and calculation procedure for the preferred embodiments. The purpose of the procedure is to derive the status of a superordinate service 80 (in the depicted example the result is "critical") on the basis of the statuses of subordinate services 92 and the statuses of messages 94 directly concerning the status of the superordinate service 80 in question. In a first step, the severity of the statuses of the subordinate services 92 is increased, decreased, or unchanged according to the status propagation rules 88 for subordinate services. The purpose of the status propagation is to reflect the different importance of the subordinate services for the status of the superordinate service 80. Similarly, the severity of the messages 94 is propagated according to the status propagation rules for messages 90. The propagated severities of both the subordinate services 84 and the messages 86 are then combined in the status calculation 82 to determine the status of the superordinate service 80 according the ignore rule and, optionally, the status calculation rules of the aspects a) to c).

In the preferred embodiments possible severity levels 96 (Fig. 7) of a status of a service are in increasing order of severity "normal", "warning", "minor", "major" and "critical". An embodiment of the invention is illustrated in Fig. 7. As it is shown there, the status "ignore" 98 is additionally introduced in order to label a service that is not intended to contribute to the status calculation of the superordinate service. This feature is very useful for example in the case of a known outage of a service such as a scheduled maintenance. Although the administrator is informed about the outage of the service in question, error messages are created and sent to the status engine. In order to prevent such an expected event as a maintenance of a service from showing a "critical" status in the navigator display 6 or affecting the statuses of other services, the service can be excluded from the status calculation using the "ignore" status 98.

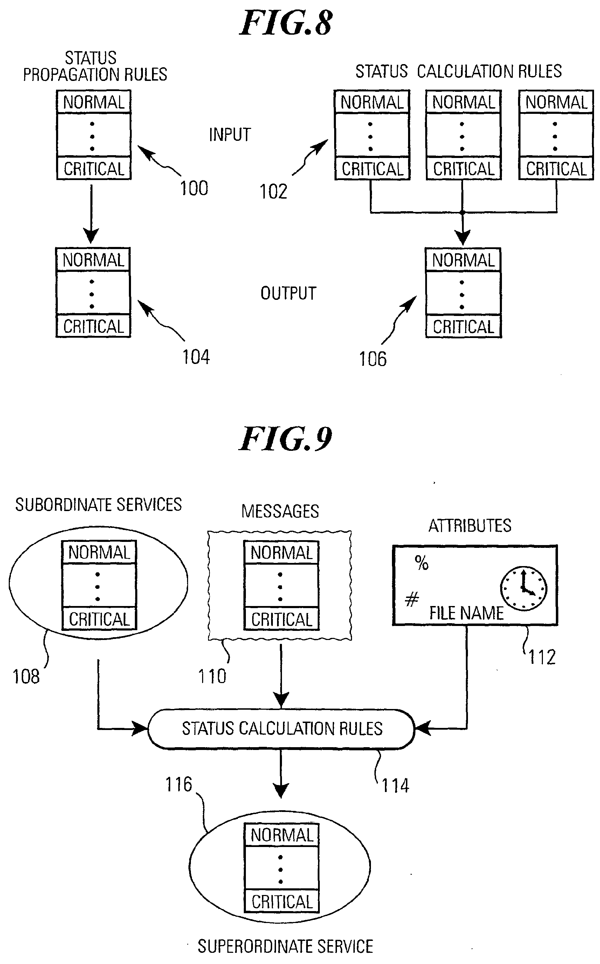

In Fig. 8 the general difference between status propagation rules and status calculation rules is schematically depicted for the preferred embodiments. While there is only one input parameter 100 for the status propagation rules, there are in general several parameters 102 that are included in the status calculation rules. In both cases, the parameters can take the severity values from "normal" to "critical" of Fig. 7. The output is generally only one value in both cases, i.e. the propagated status 104 according to the status propagation rules and the status of a superordinate service 106 according to the status calculation rules.

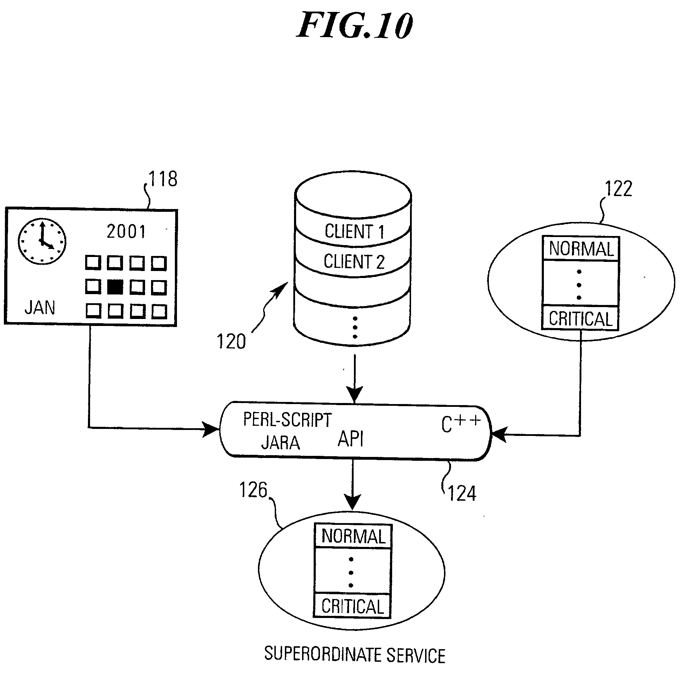

Fig. 9 visualizes the general processing for the calculation of the status of a superordinate service 116 and in particular according to aspect a) wherein additional attributes are used for the status calculation. The status calculation takes into account at least one of the following items of information: statuses of superordinate services 108, statuses of messages 110 directly influencing the superordinate service 116, and additional attributes 112 of subordinate services or the superordinate service 116 itself. White the status of subordinate services and messages can have the severity levels from "normal" to "critical", the additional attributes 112 can have any value, for instance a time stamp, a file name, a counter value, a percentage, and so forth. On the basis of these input parameters, the status of the superordinate service 116 is calculated according to the status calculation rules 114. Examples of additional attributes are the usage of a storage disk in megabytes, a time of the day or a parameter indicating whether a service is in maintenance or not and are described in more detail in Fig. 10 to 12.

Fig. 10 shows the implementation of the status calculation of a superordinate service 126 using status calculation rules 124 that are individually programmed by a user according to aspect c). In this case, not only the status of subordinate services or messages 122 can be included in the status calculation 124, but also external information, such as information coming from a client database 120 or specific time schedules 118. For example, it is possible that services for certain clients are given a higher priority and thus play a more important role in the status calculation. Or, the availability of, for instance, a Web server of a company offering Web services is more critical during certain periods of the day, e.g. in the evening when people come home from work and use this web service, or during special events such as the commercial slots of a popular football game. Using individually programmed rules, the occurrence of a server outage during these special time slots is treated as more critical than during the rest of the day. The user is free to define rules that suit special needs using any programming language such as C, C⁺⁺, an interpreter or script programming language such as PERL, that are linked to the status engine via an application programming interface (API). In an other preferred embodiment a script programming language is provided by the service management system defining a special set of syntax elements to be used for configuring the rules.

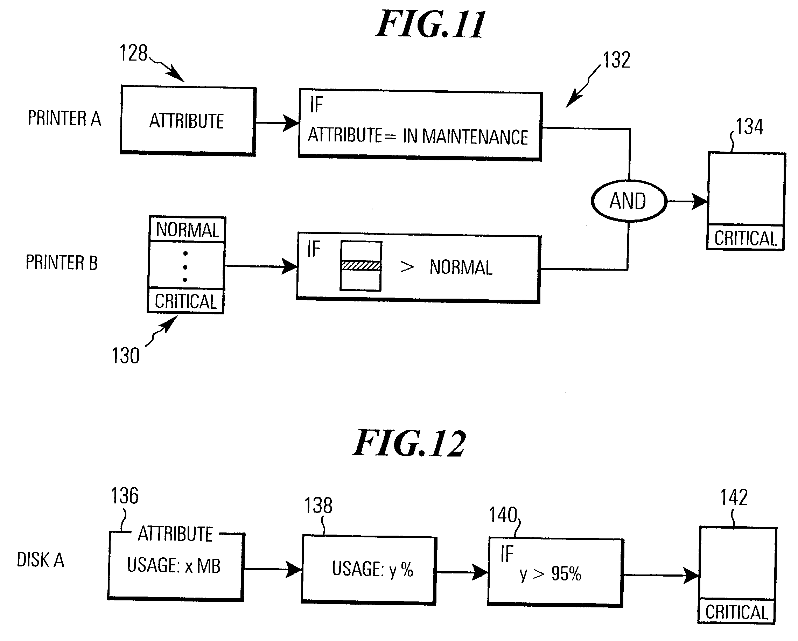

Another example of aspect b) using logical operations for the status calculation is shown in Fig. 11. As input for the calculation of the status of a superordinate service 134 two printers are assumed, printer A providing a maintenance attribute 128 and printer B providing its status 130 ranging from "normal" to "critical". An example of an implementation of a rule 132 using logical operations might be the following: if the attribute of printer A equals the value "in maintenance" AND if the severity level of printer B is higher than "normal", then the status of the superordinate service 134 is set to "critical". Other logical operators beside the AND operator that are implemented in examples of aspect b) comprise the logical OR, NOT, NOR, and NAND operators. Aspect b) also comprises comparison operators such as GREATER THAN, EQUAL TO, LOWER THAN, etc. and operators expressing conditions such as IF "true/false" THEN, and iteration operators such as FOR i= 1 to n.

An example of aspect b) using arithmetical operations for the calculation of the status of a superordinate service 142 is illustrated in Fig. 12. In this example the input parameter of the service "disk A" is an attribute indicating the current usage of disk space expressed in megabytes. In the first part 138 of the rule using arithmetical operations the relative usage expressed as a percentage is computed on the basis of the absolute value given in megabytes. The percentage value of disk usage is then used in the second part 140 of the rule stating: if the percentage of disk usage is greater than 95%, then the status of the superordinate service 142 is set to "critical". As in this example, a status calculation rule using arithmetical operations according to aspect b) is often applied in combination with additional attributes of the service other than the status according to aspect a). The arithmetical operations comprise, among others, basic operations such as addition, subtraction, multiplication, division, mathematical functions such as polynomial functions, exponential and logarithmic functions etc., differentiation and integration, and combinations of these. In addition, any combination of the above arithmetical and logical operations are included in aspect b) of the invention.

Generally, using the ignore rule and the status calculation rules according to aspect a) to c), a higher reliability and quality in monitoring services can be achieved because the status calculation rules can be adjusted more specifically and individually. For instance, owing to aspect a), more information about a service and, in particular, more service specific performance data can be included in the status calculation leading to a more precise, specific and thus reliable image of the current status of the network of services. Excluding known error events form the status calculation according to the ignore rule of the invention may help to avoid the distortion of the status information of the other services making those status evaluations more reliable. Aspect b) and c) allow to adapt the rules to specific performance data and specific requirements of the services improving the overall quality of the monitoring process.

Thus, a general purpose of the disclosed embodiments is to provide an improved method and computer system for evaluating the status of services of an information technology environment providing a greater flexibility in monitoring complex IT environments.

## Claims

1. A method for monitoring services of an information technology (IT) environment, the services being represented in a service management model, said method comprising:
evaluating, by a status engine (14), the status of a superordinate service (80) that depends on at least one of the statuses of one or more subordinate services (92) and one or more messages (110) that come from services of the IT environment and affect the status of the superordinate service (80), according to one or more rules,
one of the rules is an ignore rule that excludes a status of a specific subordinate service (92) - that otherwise would affect the statuses of other services - from the status evaluation, and **characterized by**
labeling the specific subordinate service (92) that is not intended to contribute to the status calculation of the superordinate service (80) with an ignore status, and
excluding the specific subordinate service (92) labeled with the ignore status from the status calculation in the status engine (14) according to the ignore rule using the ignore status.

2. The method of claim 1, wherein the rules further include at least one of:
a) a rule that is based on additional attributes of the service other than the status;
b) a rule that is defined by a user on the basis of at least one of i) logical and ii) arithmetical operations of the status of subordinate services or of said messages or of said attributes; and
c) a rule that is programmed individually by a user.

3. The method of claim 2, wherein the rules, when the status of the superordinate service (80) is calculated, comprise status propagation rules that have as input only one parameter, namely the status of one subordinate service (92), and status calculation rules (114) that have as input one or more parameters, chosen from the group of: the status of subordinate services (92), messages (110), and attributes (112).

4. The method of claim 2 or 3, wherein the evaluation of the status of the superordinate service (80) depends on all three different types of input data: the status of subordinate services (92), the messages (110) affecting the superordinate service and the additional attributes of the services.

5. The method of claim 2, wherein the additional attributes can take values that are different from the possible values of the status of the services.

6. The method according to any of claims 2 to 5, wherein specific subordinate services are individually treated for the evaluation of the superordinate service.

7. The method according to any of claims 2 to 6, wherein user-specific external data is included in the rules.

8. The method according to any of claims 2 to 7, wherein time of the day information is included in the rules.

9. A computer system for monitoring services of an information technology (IT) environment, the services being represented in a service management model, said system comprising:
a user interface for configuring rules;
a graphical display for visualizing monitoring results; and
a status engine (14) for evaluating the status of the services, said status engine (14) is programmed so as to calculate the status of a superordinate service (80) that depends on at least one of the statuses of one or more subordinate services (92) and one or more messages (110) that come from services of the IT environment and affect the status of the superordinate service (80), according to one or more rules,
one of the rules is an ignore rule that excludes a status of a specific subordinate service - that otherwise would affect the statuses of other services - from the status evaluation, and **characterized by**
the system is arranged to label the specific subordinate service (92) that is not intended to contribute to the status calculation of the superordinate service (80) with an ignore status, and
the system is arranged to exclude the specific subordinate service (92) labeld with the ignore status from the status calculation in the status engine (14) according to the ignore rule using the ignore status.

10. The computer system of claim 9 wherein the rules further include at least one of:
a) a rule that is based on additional attributes of the service other than the status;
b) a rule that is defined by a user on the basis of at least one of i) logical and ii) arithmetical operations of the status of subordinate services or of said messages or of said attributes; and
c) a rule that is programmed individually by a user.

11. The computer system of claim 9 or 10, wherein the interface for configuring the rules is a graphical user interface.

12. The computer system according to claim 10 or 11, wherein the interface for configuring the rules is an application programming interface to other programming languages.

13. The computer system according to anyone of claims 10 to 12, wherein the interface for configuring the rules is a script programming language of which the syntax is provided by the status engine.

14. The computer system according to anyone of claims 9 to 13, wherein the status engine is capable of handling a graph structure of the IT network of services in which each service can have one or more depending services and one or more services on which it depends.

15. The computer system according to anyone of claims 9 to 14, wherein the dependencies between the services of the IT environment are visualized as a graphical representation.

16. The computer system according to anyone of claims 9 to 15, wherein the status and status changes of the services of the IT environment are visualized in a graphical representation.

17. A computer program product including program code, when executed on a computer system, for carrying out a method according to claim 1 for monitoring services within an information technology (IT) environment.

18. The computer program product of claim 17 wherein the rules further include at least one of:
a) a rule that is based on additional attributes of the service other than the status;
b) a rule that is defined by a user on the basis of at least one of i) logical and ii) arithmetical operations of the status of subordinate services or of said messages or of said attributes; and
c) a rule that is programmed individually by a user.

19. The computer program product of claim 17 or 18, wherein the program code provides an interface to the user for configuring the rules.

## Patentansprüche

1. Verfahren zum Überwachen von Diensten einer IT(Informationstechnik)-Umgebung, wobei die Dienste in einem Dienstverwaltungsmodell repräsentiert werden, wobei das Verfahren Folgendes umfasst:
Auswerten, durch einen Zustandsautomaten (14), des Status eines übergeordneten Dienstes (80), der abhängt von wenigstens einem der Status eines oder mehrerer untergeordneter Dienste (92) und einer oder mehrerer Nachrichten (110), die von Diensten der IT-Umgebung stammen und sich auf den Status des übergeordneten Dienstes (80) auswirken, nach einer oder mehreren Regeln,
wobei eine der Regeln eine Ignorier-Regel ist, die einen Status eines spezifischen untergeordneten Dienstes (92), der ansonsten die Status anderer Dienste betreffen würde, von der Statusauswertung ausnimmt, und **gekennzeichnet durch**
Markieren des spezifischen untergeordneten Dienstes (92), der nicht zu der Statusberechnung des übergeordneten Dienstes (80) beitragen soll, mit einem Ignorier-Status und
Ausschließen des mit dem Ignorier-Status markierten spezifischen untergeordneten Dienstes (92) aus der Statusberechnung in dem Zustandsautomaten (14) nach der Ignorier-Regel unter Einsatz des Ignorier-Status.

2. Verfahren nach Anspruch 1, wobei die Regeln ferner wenigstens eine der Folgenden enthalten:
a) eine Regel, die auf anderen zusätzlichen Attributen des Dienstes als dem Status basiert;
b) eine Regel, die von einem Benutzer definiert ist auf der Grundlage von i) logischen und/oder ii) arithmetischen Funktionen des Status von untergeordneten Diensten oder der Nachrichten oder der Attribute; und
c) eine Regel, die individuell von einem Benutzer programmiert ist.

3. Verfahren nach Anspruch 2, wobei die Regeln, wenn der Status des übergeordneten Dienstes (80) berechnet wird, Folgendes umfassen:
Statusweiterleitungsregeln, die als Eingabe nur einen Parameter aufweisen, nämlich den Status eines untergeordneten Dienstes (92), sowie Statusberechnungsregeln (114), die als Eingabe einen oder mehrere Parameter aufweisen, ausgewählt aus der Gruppe bestehend aus: dem Status von untergeordneten Diensten (92), Nachrichten (110) und Attributen (112).

4. Verfahren nach Anspruch 2 oder 3, wobei das Auswerten des Status des übergeordneten Dienstes (80) von allen drei verschiedenen Typen von Eingabedaten abhängig ist: dem Status von untergeordneten Diensten (92), den Nachrichten (110) mit Auswirkung auf den übergeordneten Dienst und den zusätzlichen Attributen der Dienste.

5. Verfahren nach Anspruch 2, wobei die zusätzlichen Attribute Werte annehmen können, die sich von den möglichen Werten des Status der Dienste unterscheiden.

6. Verfahren nach einem der Ansprüche 2 bis 5, wobei bestimmte untergeordnete Dienste zum Auswerten des übergeordneten Dienstes individuell behandelt werden.

7. Verfahren nach einem der Ansprüche 2 bis 6, wobei benutzerspezifische externe Daten in den Regeln enthalten sind.

8. Verfahren nach einem der Ansprüche 2 bis 7, wobei Uhrzeitinformationen in den Regeln enthalten sind.

9. Computersystem zum Überwachen von Diensten einer IT(Informationstechnik)-Umgebung, wobei die Dienste in einem Dienstverwaltungsmodell repräsentiert werden, wobei das System Folgendes umfasst:
eine Benutzerschnittstelle zum Konfigurieren von Regeln;
eine grafische Anzeige zum Visualisieren von Überwachungsergebnissen; und
einen Zustandsautomaten (14) zum Auswerten des Status der Dienste, wobei der Zustandsautomat (14) so programmiert ist, dass er Folgendes berechnet: den Status eines übergeordneten Dienstes (80), der abhängt von wenigstens einem der Status eines oder mehrerer untergeordneter Dienste (92) und einer oder mehrerer Nachrichten (110), die von Diensten der IT-Umgebung stammen und sich auf den Status des übergeordneten Dienstes (80) auswirken, nach einer oder mehreren Regeln,
wobei eine der Regeln eine Ignorier-Regel ist, die einen Status eines spezifischen untergeordneten Dienstes, der ansonsten die Status anderer Dienste betreffen würde, von der Statusauswertung ausnimmt, und **gekennzeichnet dadurch, dass**
das System angeordnet ist zum Markieren des spezifischen untergeordneten Dienstes (92), der nicht zu der Statusberechnung des übergeordneten Dienstes (80) beitragen soll, mit einem Ignorier-Status und
das System angeordnet ist zum Ausschließen des mit dem Ignorier-Status markierten spezifischen untergeordneten Dienstes (92) aus der Statusberechnung in dem Zustandsautomaten (14) nach der Ignorier-Regel unter Einsatz des Ignorier-Status.

10. Computersystem nach Anspruch 9, wobei die Regeln ferner wenigstens eine der Folgenden enthalten:
a) eine Regel, die auf anderen zusätzlichen Attributen des Dienstes als dem Status basiert;
b) eine Regel, die von einem Benutzer definiert ist auf der Grundlage von i) logischen und/oder ii) arithmetischen Funktionen des Status von untergeordneten Diensten oder der Nachrichten oder der Attribute; und
c) eine Regel, die individuell von einem Benutzer programmiert ist.

11. Computersystem nach Anspruch 9 oder 10, wobei die Schnittstelle zum Konfigurieren der Regeln eine grafische Benutzeroberfläche ist.

12. Computersystem nach Anspruch 10 oder 11, wobei die Schnittstelle zum Konfigurieren der Regeln eine Anwendungsprogrammierschnittstelle für andere Programmiersprachen ist.

13. Computersystem nach einem der Ansprüche 10 bis 12, wobei die Schnittstelle zum Konfigurieren der Regeln eine Skript-Programmiersprache ist, deren Syntax von dem Zustandsautomaten bereitgestellt wird.

14. Computersystem nach einem der Ansprüche 9 bis 13, wobei der Zustandsautomat in der Lage ist, eine Graphenstruktur des IT-Dienstnetzwerks zu verwalten, in dem jeder Dienst einen oder mehrere abhängige Dienste sowie einen oder mehrere Dienste, von denen er abhängt, aufweisen kann.

15. Computersystem nach einem der Ansprüche 9 bis 14, wobei die Abhängigkeiten zwischen den Diensten der IT-Umgebung als eine grafische Darstellung visualisiert werden.

16. Computersystem nach einem der Ansprüche 9 bis 15, wobei der Status und die Statusänderungen der Dienste der IT-Umgebung in einer grafischen Darstellung visualisiert werden.

17. Computerprogrammprodukt einschließlich Programmcode zum Durchführen, bei Ausführung auf einem Computersystem, eines Verfahrens nach Anspruch 1 zum Überwachen von Diensten in einer IT(Informationstechnik)-Umgebung.

18. Computerprogrammprodukt nach Anspruch 17, wobei die Regeln ferner wenigstens eine der Folgenden enthalten:
a) eine Regel, die auf anderen zusätzlichen Attributen des Dienstes als dem Status basiert;
b) eine Regel, die von einem Benutzer definiert ist auf der Grundlage von i) logischen und/oder ii) arithmetischen Funktionen des Status von untergeordneten Diensten oder der Nachrichten oder der Attribute; und
c) eine Regel, die individuell von einem Benutzer programmiert ist.

19. Computerprogrammprodukt nach Anspruch 17 oder 18, wobei der Programmcode dem Benutzer eine Schnittstelle bereitstellt, um die Regeln zu konfigurieren.

## Revendications

1. Procédé de suivi de services d'un environnement de technologie de l'information, les services étant représentés dans un modèle de gestion de services, ledit procédé comprenant :
l'évaluation, par un moteur de statut (14), du statut d'un service supérieur (80) qui dépend d'au moins soit les statuts d'au moins un service subordonné (92) et d'au moins un message (110) qui vient des services de l'environnement de technologie de l'information et qui affecte le statut du service supérieur (80), selon au moins une règle,
une des règles consistant en une règle d'ignorance qui exclut un statut d'un service subordonné spécifique (92) - qui autrement affecterait les statuts d'autres services - à partir de l'évaluation de statut, et **caractérisé par**
l'étiquetage du service subordonné spécifique (92) qui n'est pas conçu pour contribuer au calcul de statut du service supérieur (80) avec un statut d'ignorance, et
l'exclusion du service subordonné spécifique (92) étiqueté avec le statut d'ignorance à partir du calcul de statut dans le moteur de statut (14) selon la règle d'ignorance utilisant le statut d'ignorance.

2. Procédé selon la revendication 1, dans lequel les règles comprennent en outre au moins l'une des choses suivantes :
a) une règle qui est fondée sur des attributs supplémentaires du service autre que le statut ;
b) une règle qui est définie par un utilisateur en fonction d'au moins des opérations soit i) logiques soit ii) arithmétiques du statut de services subordonnés ou desdits messages ou desdits attributs ; et
c) une règle qui est programmée individuellement par un utilisateur.

3. Procédé selon la revendication 2, dans lequel les règles, quand le statut du dispositif supérieur (80) est calculé, comprennent des règles de propagation de statut qui comptent un seul paramètre comme entrée, à savoir le statut du service subordonné (92) et des règles de calcul de statut (114) qui ont comme entrée au moins un paramètre, choisi à partir du groupe suivant : le statut des services subordonnés (92), les messages (110) et les attributs (112).

4. Procédé selon la revendication 2 ou 3, dans lequel l'évaluation du statut du service supérieur (80) dépend des trois différents types de données d'entrée : le statut des services subordonnés (92), les messages (110) affectant le service supérieur et les attributs supplémentaires des services.

5. Procédé selon la revendication 2, dans lequel les attributs supplémentaires peuvent prendre des valeurs qui diffèrent des valeurs possibles du statut des services.

6. Procédé selon l'une quelconque des revendications 2 à 5, dans lequel des services subordonnés spécifiques sont traités individuellement pour l'évaluation du service supérieur.

7. Procédé selon l'une quelconque des revendications 2 à 6, dans lequel des données externes propres à l'utilisateur sont comprises dans les règles.

8. Procédé selon l'une quelconque des revendications 2 à 7, dans lequel l'information portant sur l'heure du jour est comprise dans les règles.

9. Système informatique destiné à des services de suivi d'un environnement de technologie de l'information, les services étant représentés dans un modèle de gestion de services, ledit système comprenant :
une interface d'utilisateur servant à configurer des règles ;
un affichage graphique permettant de visualiser les résultats de suivi ; et
un moteur de statut (14) servant à évaluer le statut des services, ledit moteur de statut (14) étant programmé de manière à calculer le statut d'un service supérieur (80) qui dépend d'au moins un des statuts d'au moins un service subordonné (92) et au moins un message (110) qui provient des services de l'environnement de technologie de l'information et qui affecte le statut du service supérieur (80), en fonction d'au moins une règle,
une des règles étant une règle d'ignorance qui exclut un statut d'un service subordonné spécifique - qui autrement affecterait les statuts d'autres services - depuis l'évaluation de statut, et **caractérisé par**
**le fait que** le système est conçu pour étiqueter le service subordonné spécifique (92) qui n'est pas conçu pour contribuer au calcul de statut du service supérieur (80) avec un statut d'ignorance, et
le système est conçu pour exclure le service subordonné spécifique (92) étiqueté avec le statut d'ignorance à partir du calcul de statut dans le moteur de statut (14) en fonction de la règle d'ignorance grâce au statut d'ignorance.

10. Système informatique selon la revendication 9, dans lequel les règles comprennent en outre au moins l'un des éléments suivants :
a) une règle qui est fondée sur des attributs supplémentaires du service autre que le statut ;
b) une règle qui est définie par un utilisateur en fonction d'au moins une opération soit i) logique soit ii) arithmétique du statut des services subordonnés ou desdits messages ou desdits attributs ; et
c) une règle qui est programmée individuellement par un utilisateur.

11. Système informatique selon la revendication 9 ou 10, dans lequel l'interface servant à configurer les règles est une interface graphique d'utilisateur.

12. Système informatique selon la revendication 10 ou 11, dans lequel l'interface de configuration des règles est une interface de programmation d'application vers d'autres langues de programmation.

13. Système informatique selon l'une quelconque des revendication 10 à 12, dans lequel l'interface servant à configurer les règles est un langage de programmation de script dont la syntaxe est fournie par le moteur de statut.

14. Système informatique selon l'une quelconque des revendication 9 à 13, dans lequel le moteur de statut est à même de manipuler une structure graphique du réseau informatique de services dans lequel chaque service peut compter au moins un service dépendant et au moins un service dont il dépend.

15. Système informatique selon l'une quelconque des revendication 9 à 14, dans lequel les dépendances entre les services de l'environnement de technologie de l'information sont visualisées sous la forme d'une représentation graphique.

16. Système informatique selon l'une quelconque des revendication 9 à 15, dans lequel le statut et les variations de statut des services de l'environnement de technologie de l'information sont visualisés dans une représentation graphique.

17. Produit de type programme informatique contenant un code de programme, qui quand on l'exécute sur un système informatique, sert à mettre en oeuvre un procédé conforme à la revendication 1 servant à suivre des services dans un environnement de technologie de l'information.

18. Produit de type programme informatique selon la revendication 17, dans lequel les règles comprennent en outre soit :
a) une règle qui est fondée sur des attributs supplémentaires du service autre que le statut ;
b) une règle qui est définie par un utilisateur en fonction d'au moins une opération soit i) logique soit ii) arithmétique du statut de services subordonnés ou desdits messages ou desdits attributs ; et
c) une règle qui est programmée individuellement par un utilisateur.

19. Produit de type programme informatique selon la revendication 17 ou 18, dans lequel le code de programme procure une interface à l'utilisateur pour configurer les règles.
